# EUROPEAN PATENT SPECIFICATION

(11) **EP 3 448 897 B1**
(45) Date of publication and mention of the grant of the patent: **09.09.2020**
(21) Application number: 17718105.4
(22) Date of filing: 24.04.2017
(51) Int. Cl.: C08F 10/02, C08F 4/654, C08F 4/651

(54) **CATALYST COMPONENTS FOR THE POLYMERIZATION OF OLEFINS**
KATALYSATORKOMPONENTEN ZUR OLEFINPOLYMERISIERUNG
COMPOSANTS DE CATALYSEUR POUR LA POLYMÉRISATION D'OLÉFINES

(30) Priority: 29.04.2016 EP 16167608
(43) Date of publication of application: 06.03.2019
(73) Proprietor: Basell Poliolefine Italia S.r.l., 20121 Milano (IT)
(72) Inventor: GUIDOTTI, Simona, 44122 Ferrara (IT); DALL'OCCO, Tiziano, 44122 Ferrara (IT); LIGUORI, Dario, 44122 Ferrara (IT); MORINI, Giampiero, 44122 Ferrara (IT)
(74) Representative: LyondellBasell
(86) International application number: PCT/EP2017/059619
(87) International publication number: WO 2017/186623

(56) References cited:
- WO-A1-2007/147714
- WO-A1-2011/076675
- US-A- 5 198 399
- US-A- 5 424 263

## Description

### FIELD OF THE INVENTION

The present disclosure relates to a process for the preparation of catalyst components for the (co)polymerization of olefins, in particular ethylene, comprising Mg, Ti and halogen elements and optionally an electron donor compound.

### BACKGROUND OF THE INVENTION

Ethylene polymers such as high density polyethylene (HDPE), linear low density polyethylene (LLDPE) and ultrahigh molecular weight polyethylene (UHMWPE) are typically obtained by polymerizing ethylene, optionally in mixture with higher alpha olefins, in the presence of a coordination catalyst, one type of which is constituted by the Ziegler-Natta (ZN) catalyst. The polymerization processes typically involve the use of a solid catalyst component comprising magnesium chloride based supports on which an active metal (such as titanium chloride) is fixed. The resulting procatalyst is then activated for polymerization by reacting it with an organoaluminum compound.

The procatalyst can be produced according to many different preparation routes which impart specific characteristics to it. However, in the ethylene polymerization field one of the most important catalyst features is its polymerization activity. Additionally, the capability to produce ethylene polymers with high intrinsic viscosity (UHMWPE) and capability to efficiently distribute the comonomer (higher alpha olefin) into the polyethylene chain in order to produce good quality LLDPE is important.

U.S. Pat. No. 4,220,554 describes a process for preparing the ZN solid catalyst component comprising reacting a large excess of TiCl₄ with a precursor of the general formula MgClₙ(OR)₂₋ₙ in the presence of an internal electron donor compound at high temperatures (120 °C). The resulting catalyst component, however, shows insufficient hydrogen response and polymerization activity. WO2006/103172 describes a process for the polymerization of ethylene carried out in the presence of a catalyst component obtained by reacting TiCl₄ with the same precursor described in U.S. Pat. No. 4,220,554. Due to the use of different reaction conditions the resulting catalyst showed improved but not satisfactory activity in the ethylene polymerization to HDPE. Also, the polymerization activity when UHMWPE is manufactured is unsatisfactory.

The applicant has now surprisingly found a versatile solid catalyst component able to show high activity in the preparation of several types of ethylene polymers.

### SUMMARY OF THE INVENTION

An object of the present disclosure is a solid catalyst component for the (co)polymerization of olefins CH₂=CHR, in which R is hydrogen or a hydrocarbyl radical with 1-12 carbon atoms, obtained by a process comprising:
(a) a first step in which Ti(OEt)₄, is reacted with a Mg based compound of formula MgClₙ(OR^{I})₂-ₙ, where n is from 0.5 to 1.5, R^{I} is a C₁-C₁₀ alkyl groups, the Ti(OEt)₄ and the Mg compound are used in amounts such that the Ti/Mg molar ratio is of 0.2-0.4, the reaction temperature is 110-130 °C the reaction time is 2-5 hours; and
(b) a subsequent step in which the product obtained in (a) is reacted with a Ti compound of the formula Ti(OR^{I})_{4-y}Cl_{y}, where y is a number between 3 and 4.

### DETAILED DESCRIPTION OF THE INVENTION

The value of n preferably ranges from 0.6 to 1.4, in particular from 0.7 to 1.3 and especially from 0.8 to 1.2. The Mg based compound can be generated by an exchange reaction between organometallic compounds of the formula ClₘMgR^{III}₂₋ₘ, where m is from 0 to 1.5, and R^{III} is a hydrocarbon group having from 1 to 20 carbon atoms, with an appropriate OR^{I} group source. The OR^{I} sources are for example R^{I}OH alcohols or, preferably, a silicon compound of formula (R^{I}O)ᵣSiR₄₋ᵣ, where r is from 1 to 4 and R^{I} and R independently are C₁-C₁₀ alkyl group. In turn, as generally known in the art, organometallic compounds of formula ClₘMgR^{III}₂₋ₘ can be obtained by the reaction between Mg metal and an organic chloride R^{III}Cl, in which R^{III} is as defined above, optionally in the presence of suitable promoters. Preferably, the formation of ClₘMgR^{III}₂₋ₘ and the further exchange with the OR^{I} source takes place in one single step. The reaction can be carried out in a liquid inert medium such as a hydrocarbon that is liquid at room temperature. Usually, upon a substantial amount of exchange with the OR^{I} source, the catalyst precursors precipitate and can be easily isolated.

Also, the reaction between the Ti(OEt)₄ and the Mg compound can be carried out in an inert liquid medium selected among liquid hydrocarbons such as hexane, heptane and decane.

Preferably, R^{I} is selected from C₁-C₅ linear or branched alkyl groups and more preferably selected from ethyl, isopropyl, n-butyl, i-butyl and t-butyl groups.

At the end of step a), the resulting solid product is isolated according to conventional techniques (filtration, centrifugation, siphoning) and subjected to step (b).

In this latter step the reaction with the compound Ti(OR)_{4-y}Cl_{y} takes place.

The Ti compound is preferably TiCl₄. The Ti compound in step (b) may be used in amounts with respect to the solid coming from (a) such as to have a Ti/Mg ratio ranging from 1-100, preferably from 1-70.

When liquid Ti compounds such as TiCl₄ are used, they can be used in pure form, *i.e*., not diluted with inert medium, however, when their amounts are relatively small with respect to the solid coming from (a) they can be diluted with an inert medium as defined below.

According to one preferred embodiment, the titanium compound, preferably TiCl₄, is used in total amounts with respect to the solid coming from (a) such as to have a Ti/Mg ratio of 15:1 or lower. In this embodiment the reaction temperature is not particularly critical and can range from room temperature (about 25 °C) up to 150 °C, preferably in the range of 40-120 °C. In view of the limited amount of titanium compound, preferably TiCl₄, it is preferred to carry out the reaction in an inert medium, that is an inert liquid at least at the reaction temperature. Preferred inert media are liquid aliphatic or aromatic hydrocarbons, optionally chlorinated, such as those having from 3 to 20 carbon atoms. Especially preferred are propane, n-butane, n-pentane, n-hexane, n-heptane, decane, benzene, toluene and isomers thereof. Mixture of two or more of these hydrocarbons can be used.

According to another preferred embodiment, the titanium compound, preferably TiCl₄, is used at a Ti:Mg molar ratio higher than 15:1 and in a pure form. In this embodiment the reaction temperature may be kept at values lower than 80 °C, and preferably in the range of 20-70 °C, in combination with reaction times ranging from 0.2 to 1.5 hours. According to an alternative procedure, the temperature is maintained at values higher than 80 °C and preferably in the range of 90-130 °C preferably in combination with reaction times of 1.5 to 4 hours.

At the end of the reaction with the Ti compound the solid is washed with inert liquid hydrocarbons according to conventional routines known in the relevant art and then can be used in the preparation of the final catalyst.

In an alternative embodiment, the solid catalyst component can be subject to a further step (c) which comprises a reaction with an internal electron donor compound (ID).

Preferably, the reaction is carried out under conditions such that the ID is added to the reaction mixture alone or in a mixture with other compounds in which it represents the main component in terms of molar amount. Although not strictly required, the contact is typically carried out in a liquid medium such as a liquid hydrocarbon. The amount of donor used is such that the ratio Mg/donor ranges from 0.5 to 3, preferably from 0.7 to 1.5.

The ID compound can be selected from among alcohols, glycols, esters, ketones, amines, amides, nitriles, alkoxysilanes and ethers. Preferably, it is selected among cyclic ethers having 3-5 carbon atoms such as tetrahydrofuran, dioxane, and methyltetrahydrofuran. Tetrahydrofuran is the most preferred.

The temperature at which the contact takes place can vary depending on the nature of the reagents. Generally it is in a range from -10 °C to 150 °C and preferably from 0 °C to 120 °C. It is clear that temperatures causing the decomposition or degradation of any specific reagents should be avoided even if they fall within the generally suitable range. Also the time of the treatment can vary in dependence of other conditions such as nature of the reagents, temperature, concentration, *etc.* As a general indication, this contact step can last from 10 minutes to 10 hours, more frequently from 0.5 to 5 hours. If desired, in order to further increase the final donor content, this step can be repeated one or more times. At the end of this step the solid is recovered by separation of the suspension via conventional methods (such as settling and removing of the liquid, filtration, and centrifugation) and can be subjected to washings with solvents. Although the washings are typically carried out with inert hydrocarbon liquids, it is also possible to use more polar solvents (having, for example, a higher dielectric constant) such as halogenated or oxygenated hydrocarbons.

If step (c) is carried out, then it may be preferred to subject the solid product recovered from step (c) to a further step (d), comprising a thermal treatment carried out at temperatures ranging from 70 °C to 150 °C, preferably from 80 °C to 130 °C, and more preferably from 85 °C to 100 °C.

The thermal treatment can be carried out in several ways. According to one treatment, the solid coming from step (c) is suspended in an inert diluent like a hydrocarbon and then subjected to heating while maintaining the system under stirring.

According to an alternative technique, the solid can be heated in a dry state by inserting it in a device having jacketed heated walls. While stirring can be provided by means of mechanical stirrers placed within the device, it is preferred for stirring to take place by using rotating devices.

According to a different embodiment, the solid coming from (c) can be heated by subjecting it to a flow of hot inert gas such as nitrogen, preferably maintaining the solid under fluidization conditions.

The heating time is not fixed but may vary depending on the other conditions such as the maximum temperature reached. It generally ranges from 0.1 to 10 hours, more specifically from 0.5 to 6 hours. Usually, higher temperatures allow the heating time to be shorter while lower temperatures may require longer reaction times.

The process described in step (d) can be carried out immediately after the previous step, without the need of isolating the solid product coming from that previous step. However, if desired the solid product coming from the previous step can be isolated and washed before being subjected to the subsequent step.

The solid catalyst component prepared according to the process of the present disclosure has an average particle size which may range from 5 to 120 µm, and more preferably from 10 to 100 µm.

The solid catalyst component prepared according to the process of the present disclosure is converted into catalyst for the polymerization of olefins by reacting it with alkyl-Al compounds according to known methods.

The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl (diethyl aluminum chloride) and Al₂Et₃Cl₃, possibly in mixture with the above cited trialkylaluminums. A mixture of aluminum triethyl and diethylaluminum chloride is particularly preferred.

The Al/Ti ratio is higher than 1 and is generally between 50 and 2000.

Optionally, an external electron-donor (ED) compound(s) can be used. It is preferably selected from silicon compounds, ethers, esters, amines, heterocyclic compounds and particularly 2,2,6,6-tetramethylpiperidine and ketones.

The catalyst prepared according to the present disclosure can be used in a process for the (co)polymerization of olefins CH₂=CHR, in which R is hydrogen or a hydrocarbyl radical with 1-12 carbon atoms.

As already mentioned, the catalysts of the present disclosure are suitable for preparing ethylene polymers in very high yields.

Examples of other polymers that can be prepared with the catalyst of the disclosure are very-low-density and ultra-low-density polyethylene (VLDPE and ULDPE, having densities lower than 0.920 g/cm³, including values down to 0.880 g/cm³) consisting of copolymers of ethylene with one or more alpha-olefins having from 3 to 12 carbon atoms, having a mole content of units derived from ethylene of higher than 80%; and high density ethylene polymers (HDPE, having a density higher than 0.940 g/cm³), comprising ethylene homopolymers and copolymers of ethylene with alpha-olefins having 3-12 carbon atoms and UHMWPE characterized by an intrinsic viscosity [η] in tetraline at 135 °C of higher than 10.

The polymerization process can be carried out according to known techniques, for example, slurry polymerization using as a diluent an inert hydrocarbon solvent, or bulk polymerization using a liquid monomer (for example, propylene) as a reaction medium. Moreover, it is possible to carry out the polymerization process in gas-phase operating in one or more fluidized or mechanically agitated bed reactors. However, the slurry polymerization in an inert medium such as propane, butane, pentane, hexane, heptane and mixtures thereof is a preferred technique.

The following examples are given in order to better illustrate the disclosure.

### EXAMPLES

### CHARACTERIZATIONS

### Determination of Mg, Ti

The determination of Mg and Ti content in the solid catalyst component has been carried out via inductively coupled plasma emission spectroscopy on "I.C.P Spectrometer ARL Accuris".

The sample was prepared by analytically weighting, in a "Fluxy" platinum crucible," 0.1-0.3 grams of catalyst and 2 grams of lithium metaborate/tetraborate in a 1/1 mixture. After the addition of some drops of potassium iodide (KI) solution, the crucible is inserted in a special apparatus, a "Claisse Fluxy," for the complete burning. The residue is collected with a 5% v/v HNO₃ solution and then analyzed via ICP at the following wavelengths: magnesium: 279.08 nm; titanium: 368.52 nm.

### Determination of Cl

The determination of Cl content in the solid catalyst component has been carried out by potentiometric titration with silver nitrate. In a 250 mL beaker the contents were subsequently charged with 5 mL of a sodium hydroxide solution (10% wt./vol. in water) and 0.1-0.3 grams of catalyst. After 20 min of stirring at room temperature, 40 mL of a 3.6 M nitric acid solution in water were added and stirring was continued for additional 10 min. After dilution with 100 mL of demineralized water, the titration started with a 0.1 N AgNO₃ solution in water. As soon as the point of equivalence was found, the amount of titrant used was calculated and the amount of chlorine present in the catalyst quantified.

### Determination of internal donor content (THF, EtOH)

The determination of the content of internal donor in the solid catalytic compound was done through gas chromatography. The solid component was dissolved in acetone, an internal standard was added, and a sample of the organic phase was analyzed in a gas chromatograph to determine the amount of donor present in the starting catalyst compound.

### Determination of Melt Index (MIE, MIF, MIP)

The melt indices are measured at 190 °C according to ASTM D-1238, condition "E" (load of 2.16 kg), "P" (load of 5.0 kg) and "F" (load of 21.6 kg).

The ratio between MIF and MIE is indicated as F/E, while the ratio between MIF and MIP is indicated as F/P.

### Determination of Intrinsic Viscosity

A weighed amount of the sample was dissolved in tetrahydronaphthalene (THN) at a constant temperature of 135 °C. The flow time of this diluted solution is determined with a Sematech Cinevisco system equipped with an Ubbelohde modified capillary viscometer, which is thermostated at 135 °C. Irganox 1010 was added as an antioxidant to minimize degradation of the molecular weight. The IV calculations were performed using the Huggins' equation and assuming a Huggins' coefficient equal to 0.35. The flow times of solvents and solutions were corrected taking into account the contributions due to the kinetic energy. The solution concentrations were evaluated taking into account the change of THN volumes from room temperature to 135 °C.

### Determination of comonomer content

1-butene was determined via infrared (IR) spectrometry.

### Determination of fraction soluble in xylene

2.5 g of polymer and 250 ml of o-xylene were placed in a round-bottomed flask equipped with a cooler and a reflux condenser and kept under nitrogen. The resulting mixture was heated to 135 °C and was kept under stirring for about 60 minutes. The final solution was allowed to cool to 25 °C under continuous stirring, and the insoluble polymer was then filtered. The filtrate was then evaporated in a nitrogen flow at 140 °C to reach a constant weight. The content of the xylene-soluble fraction is expressed as a percentage of the original 2.5 grams.

### Determination of effective density

The polymer density was measured according to method ASTM-D 1505. This test method is based on observing the level to which a test specimen sinks in a liquid column exhibiting a density gradient. Standard specimens are cut from strands (extrudates) extruded from a plastomer ("grader") under defined conditions. Non-standard specimens may be taken from finished objects (molded specimens, extruded items, films, *etc*.).

### Procedure for the preparation of the solid catalyst precursor

Into a 1000 ml round bottom flask, equipped with breakwaters, a mechanical stirrer, a cooler and a thermometer, 600 ml of *n*-decane and 42.3 g of the magnesium compound MgClOC₂H₅ were sequentially introduced at room temperature under nitrogen atmosphere. While stirring, titanium (IV) ethoxide was added dropwise in an amount to produce a Ti/Mg molar ratio of 0.3. The whole mixture was heated at 120 °C and kept under stirring at this temperature for 3 hours. Thereafter, stirring was stopped, the solid product was allowed to settle and the supernatant liquid was siphoned off. The solid was washed two times with anhydrous heptane at 90 °C, then with anhydrous hexane in a temperature gradient down to 60 °C, and one time at room temperature. The resulting solid was then dried under vacuum and analyzed. The solid showed the following characteristics:

| | |
|---|---|
| - Ti: | 7.5% (by weight) |
| - Mg: | 13.7% (by weight) |
| - EtOH: | 53.1% (by weight) |

Therefore, the Ti/Mg molar ratio in this adduct is 0.28 and the EtOH/Mg molar ratio is 2.03. The particle size distribution (SPAN) of the support was found to be 1.1 The amount of Ti bonded in the precursor with respect to the fed initial amount used was 92.5%wt. The amount of Mg bonded compound with respect to the fed initial amount used was more than 90%.

### Comparative procedure for the preparation of the solid catalyst precursor

The preparation was carried out as described above with the difference that the temperature was kept at 90°C instead of 120°C. The amount of Ti bonded in the precursor with respect to the fed initial amount used was only 47.2%wt.

### Procedure for the preparation of the solid catalyst component A

Into a 500 ml round bottom flask, equipped with mechanical stirrer, cooler and thermometer 220 ml of TiCl₄ were introduced at room temperature under nitrogen atmosphere. After cooling to 0 °C, 15.3 g of the solid catalyst precursor (prepared as described above) was added into the flask. The temperature was raised to 50 °C and maintained for 0.5 hour. Thereafter, stirring was stopped, the solid product was allowed to settle and the supernatant liquid was siphoned off at 50 °C. After the supernatant was removed, additional fresh TiCl₄ was added to reach the initial liquid volume again. The mixture was then heated at 50 °C and kept at this temperature for 0.5 hour. Stirring was stopped again, the solid was allowed to settle and the supernatant liquid was siphoned off. The solid was washed three times with anhydrous heptane at 50 °C, then with anhydrous hexane in temperature gradient down to 50 °C and one time at room temperature. The resulting solid was then dried under vacuum and analyzed. The solid showed the following characteristics:

| | |
|---|---|
| - Ti | 9.8% (by weight) |
| - Mg | 12.7% (by weight) |
| - EtOH | 12.2% (by weight) |

Therefore, the Mg/Ti molar ratio in this solid catalyst component is 2.56 and the EtOH/Ti molar ratio is 1.29.

### Procedure for the preparation of the solid catalyst component B

Into a 500 ml round bottom flask, equipped with a mechanical stirrer, a cooler and a thermometer, 215 ml of TiCl₄ were introduced at room temperature under nitrogen atmosphere. After cooling to 0 °C, 15.0 g of the solid catalyst precursor (prepared as described above) was added into the flask. The temperature was raised to 100 °C and maintained for 1.0 hour. Thereafter, stirring was stopped, the solid product was allowed to settle and the supernatant liquid was siphoned off at 100 °C. After the supernatant was removed, additional fresh TiCl₄ was added to reach the initial liquid volume again. The mixture was then heated at 130 °C and kept at this temperature for 0.5 hour. Stirring was stopped again, the solid was allowed to settle and the supernatant liquid was siphoned off at 130 °C. After the supernatant was removed, additional fresh TiCl₄ was added to reach the initial liquid volume again. The mixture was then heated at 130 °C and kept at this temperature for 0.5 hour. Stirring was stopped again, the solid was allowed to settle and the supernatant liquid was siphoned off. The solid was washed three times with anhydrous heptane at 90 °C, then with anhydrous hexane in a temperature gradient down to 60 °C and one time at room temperature. The resulting solid was then dried under vacuum and analyzed. The solid showed the following characteristics:

| | |
|---|---|
| - Ti: | 6.8% (by weight) |
| - Mg: | 17.3% (by weight) |
| - EtOH: | 4.1% (by weight) |

Therefore, the Mg/Ti molar ratio in this solid catalyst component is 5.02 and the EtOH/Ti molar ratio is 0.63.

### Procedure for the preparation of the solid catalyst component C

Into a 500 ml round bottom flask, equipped with a mechanical stirrer, a cooler and a thermometer, 225 ml of anhydrous heptane and 15.8 g of the solid catalyst precursor (prepared as described above) were sequentially introduced at room temperature under nitrogen atmosphere. While stirring, titanium (IV) chloride was added dropwise in an amount such to meet a Ti/Mg molar ratio of 4.1. The whole mixture was heated at 85 °C and kept under stirring at this temperature for 1.0 hour. Thereafter, stirring was stopped, the solid product was allowed to settle and the supernatant liquid was siphoned off at 85 °C. After the supernatant was removed, an additional 225 ml of fresh anhydrous heptane were added. Subsequently, TiCl₄ was added dropwise in an amount to produce a Ti/Mg molar ratio of 4:1. The mixture was then heated at 95 °C and kept at this temperature for 1.0 hour. Stirring was stopped again, the solid was allowed to settle and the supernatant liquid was siphoned off. The solid was washed three times with anhydrous heptane at 90 °C, then one time with anhydrous hexane at 55 °C and one time at room temperature. The resulting solid was then dried under vacuum and analyzed. The solid showed the following characteristics:

| | |
|---|---|
| -Ti: | 10.9% (by weight) |
| -Mg: | 13.7% (by weight) |
| - EtOH: | 9.5% (by weight) |

Therefore, the Mg/Ti molar ratio in this solid catalyst component is 2.47 and the EtOH/Ti molar ratio is 0.91.

### Procedure for the preparation of the solid catalyst component D

Into a 250 ml round bottom flask, equipped with mechanical stirrer, cooler and thermometer 95 ml of heptane and 3.7 g of solid catalyst component B were sequentially introduced at room temperature under nitrogen atmosphere. The temperature was then raised to 50 °C and under stirring tetrahydrofuran (THF) was added dropwise in an amount to produce a molar ratio of Mg:THF of 1:15. The reaction mixture was stirred at 50 °C for 2.0 hours. The stirring was discontinued, the solid product was allowed to settle and the supernatant liquid was siphoned off. The solid was washed once with anhydrous heptane at 50 °C. After decantation, the supernatant liquid was removed and additional fresh heptane was added to reach the initial liquid volume again. The mixture was then heated at 95 °C and kept at this temperature for 2.0 hours. Stirring was stopped again, the solid was allowed to settle and the supernatant liquid was siphoned off. The solid was washed twice with anhydrous heptane at 60 °C, then once with anhydrous hexane at room temperature and finally dried under vacuum and analyzed. The solid showed the following characteristics:

| | |
|---|---|
| - Ti: | 3.2% (by weight) |
| - Mg: | 14.7% (by weight) |
| - THF: | 22.3% (by weight) |
| - EtOH: | 2.6% (by weight) |

Therefore, the Mg:Ti molar ratio in this solid catalyst component is 9.09 and the THF:Ti molar ratio is 4.63.

### Procedure for the preparation of the solid catalyst component E (comparative)

The solid catalyst component E was prepared by applying the procedure described above for the synthesis of the solid catalyst component A, but using MgClOC₂H₅ as a solid catalyst precursor. The solid showed the following characteristics:

| | |
|---|---|
| - Ti: | 7.5% (by weight) |
| - Mg: | 14.7% (by weight) |
| - EtOH: | 17.1% (by weight) |

Therefore, the Mg:Ti molar ratio in this solid catalyst component is 3.86 and the EtOH:Ti molar ratio is 2.37.

### Procedure for the preparation of the solid catalyst component F (comparative)

The solid catalyst component F was prepared by applying the procedure described above for the synthesis of the solid catalyst component B, but using MgClOC₂H₅ as a solid catalyst precursor. The resulting solid was then dried under vacuum and analyzed. The solid showed the following characteristics:

| | |
|---|---|
| -Ti: | 5.1% (by weight) |
| -Mg: | 18.4% (by weight) |
| - EtOH: | 4.4% (by weight) |

Therefore, the Mg:Ti molar ratio in this solid catalyst component is 7.09 and the EtOH:Ti molar ratio is 0.88.

### Procedure for the preparation of the solid catalyst component G (comparative)

The solid catalyst component G was prepared by applying the procedure described above for the synthesis of the solid catalyst component C, but using MgClOC₂H₅ as a solid catalyst precursor. The resulting solid was then dried under vacuum and analyzed. The solid showed the following characteristics:

| | |
|---|---|
| - Ti: | 8.0% (by weight) |
| - Mg: | 16.0% (by weight) |
| - EtOH: | 13.5% (by weight) |

Therefore, the Mg:Ti molar ratio in this solid catalyst component is 3.97 and the EtOH:Ti molar ratio is 1.76.

### General procedure for the HDPE polymerization test

A 4.5-liter stainless-steel autoclave equipped with a magnetic stirrer, temperature and pressure indicator, and a feeding line for hexane, ethylene, and hydrogen, was used and purified by fluxing pure nitrogen at 70 °C for 60 minutes. Then, a solution of 1550 cm³ of hexane containing 0.25 g of triethyl aluminum (TEA) and 0.125 g of diethyl aluminum chloride (DEAC) was introduced at a temperature of 30 °C under nitrogen flow. In a separate 100 cm³ round bottom glass flask were subsequently introduced 50 cm³ of anhydrous hexane, 0.25 g of triethyl aluminum (TEA), 0.125 g of diethyl aluminum chloride (DEAC) and 0.005-0.010 grams of the solid catalyst component. The components were mixed together, aged 10 minutes at room temperature and introduced under nitrogen flow into the reactor. The autoclave was closed, the temperature was raised to 75 °C, and hydrogen (4 bars partial pressure) and ethylene (7.0 bars partial pressure) were added. Under continuous stirring, the total pressure was maintained at 75 °C for 120 minutes by feeding ethylene. At the end of the polymerization, the reactor was depressurized and the temperature was reduced to 30 °C. The recovered polymer was dried at 40 °C under vacuum and analyzed.

### General procedure for the UHMWPE polymerization test

A 4.5-liter stainless steel autoclave equipped with a magnetic stirrer, temperature and pressure indicator, and a feeding line for hexane, ethylene, and hydrogen, was used and purified by fluxing pure nitrogen at 70 °C for 60 minutes. Then, a solution of 1550 cm³ of hexane containing 0.2 g of triethyl aluminum (TEA) was introduced at a temperature of 30 °C under nitrogen flow. In a separate 100 cm³ round bottom glass flask were subsequently introduced 50 cm³ of anhydrous hexane, 0.20 g of triethyl aluminum (TEA), optionally 0.35 mmol of dicyclopentyldimethoxysilane, D donor as an external donor (Al/D = 10 m.r.) and 0.005-0.010 grams of the solid catalyst component. They were mixed together, aged 10 minutes at room temperature and introduced under nitrogen flow into the reactor. The autoclave was closed, then the temperature was raised to 75 °C and ethylene (7.0 bars partial pressure) was added. Under continuous stirring, the total pressure was maintained at 75 °C for 120 minutes by feeding ethylene. At the end of the polymerization, the reactor was depressurized and the temperature was dropped to 30 °C. The recovered polymer was dried at 40 °C under vacuum and analyzed.

### General procedure for the LLDPE polymerization test in slurry

A 4.5 liter stainless-steel autoclave equipped with a magnetic stirrer, temperature, pressure indicator, and feeding line for ethylene, propane, 1-butene, and hydrogen, and a steel vial for the injection of the catalyst, was purified by fluxing pure nitrogen at 70 °C for 60 minutes. The autoclave was then washed with propane, heated to 75 °C and finally loaded with 800 g of propane, 200 g of 1-butene, ethylene (7.0 bar, partial pressure) and hydrogen (1.5 bar, partial pressure). In a separate 100 cm³ round bottom glass flask were subsequently introduced 50 cm³ of anhydrous hexane, the cocatalyst mixture solution composed by triethyl aluminum/diethyl aluminum chloride, TEA/DEAC 2/1 weight ratio (8.5 mmol of aluminum), 0.12 g of tetrahydrofuran as external donor (Al/THF = 5 m.r.), and 0.120 grams of the solid catalyst component (D). They were mixed together and stirred at room temperature for 10 minutes and then introduced in the reactor through the steel vial by using a nitrogen overpressure. Under continuous stirring, the total pressure was maintained constant at a constant 75 °C for 110 minutes by feeding ethylene into the system (150 g of ethylene were absorbed). At the end the polymerization, the reactor was depressurized and the temperature was reduced to 30 °C. The recovered polymer was dried at 70 °C under a nitrogen flow and weighted.

### General procedure for the LLDPE polymerization test in gas-phase

The polymerization test was carried out in a 15.0 liter stainless-steel fluidized reactor, equipped with a gas-circulation system, a cyclone separator, a thermal exchanger, a temperature and pressure indicator, a feeding line for ethylene, propane, 1-butene, and hydrogen, and with a 1 liter steel reactor for the catalyst pre-polymerization and/or injection of the catalytic system into the fluidized bed reactor. The gas-phase of the reactor is recycled with such a velocity that the polymeric bed in the reactor is kept in fluidized conditions. The reactor was heated to 86 °C and loaded with propane (61% mol), 1-butene (9% mol), ethylene (25% mol) and hydrogen (5% mol). In a separate 100 cm³ round bottom glass flask were subsequently introduced 45 cm³ of anhydrous hexane, 0.025 g of trihexyl aluminum (THA), 0.019 g of diethyl aluminum chloride (DEAC) and 0.070-0.150 grams of the solid catalyst component. The components were mixed together and stirred at 40 °C for 60 minutes and then introduced in the 1 liter reactor under a propane flow. The activated catalyst was injected into the gas-phase reactor by using a propane flow (150 g) and 0.15 g of triethyl aluminum (TEAL). The final pressure was about 21 bar, and it was kept constant during the polymerization at 86 °C for 90 minutes by feeding a 9% wt. 1-butene / 91% wt. ethylene mixture. At the end of the polymerization, the reactor was depressurized and the temperature was dropped to 30 °C. The collected polymer was dried at 70 °C under a nitrogen flow and weighed.

### Examples 1-2 and Comparative Examples C1 - C2

The solid catalyst components A, B, E and F were used for HDPE polymerization tests. Both polymerization performance and characterization are reported in Table 1.

**Table 1: HDPE polymerizations**

| | **Catalyst Component Type** | **Mileage kg/g** | **MIE g/10'** | **F/E** | **F/P** |
|---|---|---|---|---|---|
| Ex. 1 | A | 86 | 1.3 | 34.9 | 11.8 |
| Ex. 2 | B | 24 | 0.5 | 36.7 | 11.3 |
| C1 | E | 53 | 3.0 | 31.1 | 10.6 |
| C2 | F | 16 | 1.2 | 35.7 | 11.0 |

### Examples 3-8 and Comparative Examples C3 - C8

The solid catalyst components A, B, C, E, F and G were used for UHMWPE polymerization tests, optionally using the external donor dicyclopentyldimethoxysilane D. Both polymerization performance and characterization are reported in Table 2.

**Table 2: UHMWPE polymerizations**

| | **Catalyst Component Type** | **Cocatalyst Type** | **Mileage kg/g** | ***η* dL/g** |
|---|---|---|---|---|
| Ex. 3 | A | TEA/no ED | 124 | 9.8 |
| Ex. 4 | | TEA/D | 65 | 15.3 |
| Ex. 5 | B | TEA/no ED | 59 | 13.5 |
| Ex. 6 | | TEA/D | 77 | 22.6 |
| Ex. 7 | C | TEA/no ED | 140 | 9.5 |
| Ex. 8 | | TEA/D | 67 | 15.7 |
| C3 | E | TEA/no ED | 19 | 10.7 |
| C4 | | TEA/D | 35 | 15.7 |
| C5 | F | TEA/no ED | 25 | 9.7 |
| C6 | | TEA/D | 30 | 18.6 |
| C7 | G | TEA/no ED | 56 | 8.5 |
| C8 | | TEA/D | 30 | 21.0 |

### Example 9

The solid catalyst component A was tested in slurry LLDPE polymerization. The polymerization performance and characterization are reported in Table 3.

**Table 3: slurry LLDPE polymerizations**

| | **Catalyst Component Type** | **Mileage Kg/g/h** | **MIE g/10'** | **F/E** | **C4 %wt.** | **XS %wt.** | **Density g/cc** |
|---|---|---|---|---|---|---|---|
| Ex. 9 | A | 19 | 1.1 | 32.1 | 10.1 | 9.6 | 0.9229 |

### Example 10

The solid catalyst component D was tested in gas phase LLDPE polymerization. The polymerization performance and characterization are reported in Table 4.

**Table 4: gas phase LLDPE polymerization**

| | **Catalyst Component Type** | **Mileage Kg/g** | **MIE g/10'** | **F/E** | **C4 %wt.** | **XS %wt.** | **Density g/cc** |
|---|---|---|---|---|---|---|---|
| Ex. 10 | D | 6.5 | 0.9 | 25.7 | 8.3 | 5.0 | 0.9214 |

## Claims

1. A solid catalyst component for the (co)polymerization of olefins CH₂=CHR, in which R is hydrogen or a hydrocarbyl radical with 1-12 carbon atoms, obtained by a process comprising:
(a) a first step in which Ti(OEt)₄ is reacted with a Mg based compound of formula MgClₙ(OR^{I})₂₋ₙ, where n is from 0.5 to 1.5, R^{I} is a C₁-C₁₀ alkyl groups, the Ti(OEt)₄ and the Mg compound are used in amounts such that the Ti/Mg molar ratio is of 0.2-0.4, the reaction temperature is 110-130°C and the reaction time is 2-5 hours; and
(b) a subsequent step in which the product obtained in (a) is reacted with a Ti compound of formula Ti(OR^{I})_{4-y}Cl_{y}, where y is a number between 3 and 4.

2. The solid catalyst component of claim 1 in which the value of n ranges from 0.6 to 1.4.

3. The solid catalyst component according to claim 1 in which R^{I} is selected from ethyl, isopropyl, n-butyl, i-butyl and t-butyl groups

4. The solid catalyst component of claim 1 in which in step (b) the Ti compound is TiCl₄.

5. The solid catalyst component of claim 1 in which the Ti compound in step (b) is used in an amount with respect to the solid coming from (a) such as to have a Ti/Mg ratio ranging from 1 to 100.

6. The solid catalyst component of claim 5 in which the titanium compound is used in total amounts with respect to the solid coming from (a) such as to have a Ti/Mg ratio of 15:1 or lower.

7. The solid catalyst component of claim 5 in which the titanium compound is used in total amounts with respect to the solid coming from (a) such as to have a Ti/Mg ratio higher than 15:1 and in a pure form at a reaction temperature of lower than 80 °C.

8. The solid catalyst component of claim 7 in which the reaction time ranges from 0.2 to 1.5 hours.

9. The solid catalyst component of claim 5 in which the titanium compound is used in total amounts with respect to the solid coming from (a) such as to have a Ti/Mg ratio higher than 15:1 and in a pure form at a reaction temperature of higher than 80°C in combination with reaction times of 1.5 to 4 hours.

10. The solid catalyst component of claim 1 subject to a further step (c) comprising a reaction with an internal electron donor compound (ID).

11. The solid catalyst component of claim 10 in which the ID is selected from alcohols, glycols, esters, ketones, amines, amides, nitriles, alkoxysilanes and ethers.

12. The solid catalyst component of claim 11 in which the ID is tetrahydrofurane.

13. A catalyst for the (co)polymerization of olefins CH₂=CHR, in which R is hydrogen or a hydrocarbyl radical with 1-12 carbon atoms, comprising the product obtained by contacting (A) a solid catalyst component according to one or more of the preceding claims and (B) an alkyl-Al compound.

14. A process for the (co)polymerization of olefins CH₂=CHR, in which R is hydrogen or a hydrocarbyl radical with 1-12 carbon atoms carried out in the presence of the catalyst according to claim 13.

15. A process according to claim 14 for the preparation of UHMWPE.

## Patentansprüche

1. Feste Katalysatorkomponente zur (Co)polymerisation von Olefinen CH₂=CHR, wobei R Wasserstoff oder ein Kohlenwasserstoffrest mit 1 bis 12 Kohlenstoffatomen ist, welche erhalten wird nach einem Verfahren, umfassend:
(a) einen ersten Schritt, in dem Ti(OEt)₄ mit einer Verbindung auf Mg-Basis mit der Formel MgClₙ(OR^{I})₂₋ₙ umgesetzt wird, wobei n 0,5 bis 1,5 ist, R^{I} eine C₁- bis C₁₀-Alkylgruppe ist, das Ti(OEt)₄ und die Mg-Verbindung in Mengen verwendet werden, so dass das Molverhältnis von Ti/Mg 0,2 bis 0,4 beträgt, die Reaktionstemperatur 110 bis 130 °C beträgt und die Reaktionszeit 2 bis 5 Stunden ist; und
(b) einen Folgeschritt, in dem das in (a) erhaltene Produkt mit einer Ti-Verbindung mit der Formel Ti(OR^{I})_{4-y}Cl_{y} umgesetzt wird, wobei y eine Zahl zwischen 3 und 4 ist.

2. Feste Katalysatorkomponente nach Anspruch 1, wobei der Wert für n im Bereich von 0,6 bis 1,4 liegt.

3. Feste Katalysatorkomponente nach Anspruch 1, wobei R^{I} ausgewählt ist aus den Gruppen Ethyl, Isopropyl, n-Butyl, i-Butyl und tert.-Butyl.

4. Feste Katalysatorkomponente nach Anspruch 1, wobei die Ti-Verbindung in Schritt (b) TiCl₄ ist.

5. Feste Katalysatorkomponente nach Anspruch 1, wobei die Ti-Verbindung in Schritt (b) in einer Menge in Bezug auf den aus (a) resultierenden Feststoff verwendet wird, so dass ein Verhältnis von Ti/Mg im Bereich von 1 bis 100 vorliegt.

6. Feste Katalysatorkomponente nach Anspruch 5, wobei die Titanverbindung in Gesamtmengen in Bezug auf den aus (a) resultierenden Feststoff verwendet wird, so dass ein Verhältnis von Ti/Mg 15:1 oder darunter vorliegt.

7. Feste Katalysatorkomponente nach Anspruch 5, wobei die Titanverbindung in Gesamtmengen in Bezug auf den aus (a) resultierenden Feststoff, so dass ein Verhältnis von Ti/Mg höher als 15:1 vorliegt, und in reiner Form bei einer Reaktionstemperatur unter 80 °C verwendet wird.

8. Feste Katalysatorkomponente nach Anspruch 7, wobei die Reaktionszeit im Bereich von 0,2 bis 1,5 Stunden liegt.

9. Feste Katalysatorkomponente nach Anspruch 5, wobei die Titanverbindung in Gesamtmengen in Bezug auf den aus (a) resultierenden Feststoff, so dass ein Verhältnis von Ti/Mg höher als 15:1 vorliegt, und in reiner Form bei einer Reaktionstemperatur höher als 80 °C in Kombination mit Reaktionszeiten von 1,5 bis 4 Stunden verwendet wird.

10. Feste Katalysatorkomponente nach Anspruch 1, die einem weiteren Schritt (c) unterzogen wird, der eine Reaktion mit einer internen Elektronendonorverbindung (ID) umfasst.

11. Feste Katalysatorkomponente nach Anspruch 10, wobei die ID ausgewählt ist aus Alkoholen, Glykolen, Estern, Ketonen, Aminen, Amiden, Nitrilen, Alkoxysilanen und Ethern.

12. Feste Katalysatorkomponente nach Anspruch 11, wobei die ID Tetrahydrofuran ist.

13. Katalysator zur (Co)polymerisation von Olefinen CH₂=CHR, wobei R Wasserstoff oder ein Kohlenwasserstoffrest mit 1 bis 12 Kohlenstoffatomen ist, umfassend das Produkt, das durch Kontaktieren von (A) einer festen Katalysatorkomponente nach einem oder mehreren der vorhergehenden Ansprüche und (B) einer Alkyl-AI-Verbindung erhalten wird.

14. Verfahren für die (Co)polymerisation von Olefinen CH₂=CHR, wobei R Wasserstoff oder ein Kohlenwasserstoffrest mit 1 bis 12 Kohlenstoffatomen ist, welches in Gegenwart eines Katalysatorsystems gemäß Anspruch 13 durchgeführt wird.

15. Verfahren nach Anspruch 14 zur Herstellung von UHMWPE.

## Revendications

1. Constituant catalytique solide pour la (co)polymérisation d'oléfines CH₂=CHR, dans lesquelles R représente hydrogène ou un radical hydrocarbyle comprenant 1-12 atomes de carbone, obtenu par un procédé comprenant :
(a) une première étape dans laquelle du Ti(OEt)₄ est mis à réagir avec un composé à base de Mg de formule MgClₙ(OR^{I})₂₋ₙ, où n vaut 0,5 à 1,5, R^{I} représente un groupe alkyle en C₁-C₁₀, le Ti(OEt)₄ et le composé à base de Mg sont utilisés en des quantités telles que le rapport molaire Ti/Mg vaut 0,2 à 0,4, la température de réaction est de 110-130°C et le temps de réaction est de 2 à 5 heures ; et
(b) une étape subséquente dans laquelle le produit obtenu dans (a) est mis à réagir avec un composé à base de Ti de formule Ti(OR^{I})_{4-y}Cl_{y}, où y vaut un nombre entre 3 et 4.

2. Constituant catalytique solide selon la revendication 1, dans lequel la valeur de n est située dans une plage de 0,6 à 1,4.

3. Constituant catalytique solide selon la revendication 1, dans lequel R^{I} est choisi parmi les groupes éthyle, isopropyle, n-butyle, i-butyle et t-butyle.

4. Constituant catalytique solide selon la revendication 1, dans lequel, dans l'étape (b), le composé à base de Ti est le TiCl₄.

5. Constituant catalytique solide selon la revendication 1, dans lequel le composé à base de Ti dans l'étape (b) est utilisé en une quantité par rapport au solide provenant de (a) de manière à obtenir un rapport Ti/Mg situé dans une plage de 1 à 100.

6. Constituant catalytique solide selon la revendication 5, dans lequel le composé à base de titane est utilisé en des quantités totales par rapport au solide provenant de (a) de manière à obtenir un rapport Ti/Mg de 15:1 ou inférieur.

7. Constituant catalytique solide selon la revendication 5, dans lequel le composé à base de titane est utilisé en des quantités totales par rapport au solide provenant de (a) de manière à obtenir un rapport Ti/Mg supérieur à 15:1 et sous une forme pure à une température de réaction inférieure à 80°C.

8. Constituant catalytique solide selon la revendication 7, dans lequel le temps de réaction est situé dans une plage de 0,2 à 1,5 heure.

9. Constituant catalytique solide selon la revendication 5, dans lequel le composé à base de titane est utilisé en des quantités totales par rapport au solide provenant de (a) de manière à obtenir un rapport Ti/Mg supérieur à 15:1 et sous une forme pure à une température de réaction supérieure à 80°C en combinaison avec des temps de réaction de 1,5 à 4 heures.

10. Constituant catalytique solide selon la revendication 1, soumis à une étape supplémentaire (c) comprenant une réaction avec un composé donneur d'électrons interne (DI).

11. Constituant catalytique solide selon la revendication 10, dans lequel le DI est choisi parmi les alcools, les glycols, les esters, les cétones, les amines, les amides, les nitriles, les alcoxysilanes et les éthers.

12. Constituant catalytique solide selon la revendication 11, dans lequel le DI est le tétrahydrofuranne.

13. Catalyseur pour la (co)polymérisation d'oléfines CH₂=CHR, dans lesquelles R représente hydrogène ou un radical hydrocarbyle comprenant 1-12 atomes de carbone, comprenant le produit obtenu par mise en contact (A) d'un constituant catalytique solide selon l'une ou plusieurs des revendications précédentes et (B) d'un composé alkyl-Al.

14. Procédé pour la (co)polymérisation d'oléfines CH₂=CHR, dans lesquelles R représente hydrogène ou un radical hydrocarbyle comprenant 1-12 atomes de carbone, mis en œuvre en présence du catalyseur selon la revendication 13.

15. Procédé selon la revendication 14 pour la préparation d'UHMWPE (polyéthylène à poids moléculaire ultra-élevé).
